# EUROPÄISCHE PATENTANMELDUNG

(11) **EP 2 871 330 A1**
(43) Veröffentlichungstag der Anmeldung: **13.05.2015**
(21) Anmeldenummer: 13191892.2
(22) Anmeldetag: 07.11.2013
(51) Int. Cl.: F01D 25/14, F01D 25/26, F02K 1/82

(54) **Strömungsmaschine mit einer Beschichtung, Verwendung eines Kunststoffes zur Beschichtung und Verfahren zum Beschichten einer Strömungsmaschine**

(71) Anmelder: Siemens Aktiengesellschaft, 80333 München (DE)
(72) Erfinder: Ettler, Manuel, 50171 Kerpen (DE); Kocdemir, Bora, 45357 Essen (DE); Litinsky, Alexander, 45470 Mülheim (DE); Mashkin, Andrey, 50672 Köln (DE); Minninger, Dieter, 46535 Dinslaken (DE); Zimmermann, Adam, 45478 Mülheim a.d. Ruhr (DE)

(57) **Zusammenfassung**

Die Erfindung bezieht sich auf eine Strömungsmaschine umfassend ein den Strömungskanal der Strömungsmaschine radial begrenzendes Innengehäuse, wobei um das Innengehäuse eine Wärmedämmschicht angeordnet ist, und wobei die Wärmedämmschicht des Innengehäuses eine Beschichtung aus mikroporösem Kunststoff ist, der Hohlkugeln unterschiedlichen Materials und verschiedener Größe beigefügt sein können, sowie auf ein Verfahren zur Beschichtung der Strömungsmaschine und die Verwendung eines mikroporösen Kunststoffs zur Beschichtung einer Strömungsmaschine.

## Beschreibung

Die Erfindung betrifft eine Strömungsmaschine, die ein den Strömungskanal radial begrenzendes Innengehäuse umfasst, wobei um das Innengehäuse eine Beschichtung angeordnet ist, und weiterhin die Verwendung eines Kunststoffes zur Beschichtung und Verfahren zum Beschichten der Strömungsmaschine.

Der Begriff der Strömungsmaschine bezieht sich hier auf eine Turbine, besonders auf eine Gasturbine, eine Dampfturbine, und insbesondere auf eine Niederdruckturbine. Im weiteren Kontext der Beschreibung der Erfindung ist der Begriff Turbine synonym zu Dampfturbine oder Niederdruckturbine zu verstehen.

Dampfturbinen können nach dem Dampfdruck, mit dem der Dampf in die Turbine strömt, in Hoch-, Mittel- und Niederdruckturbinen eingeteilt werden, die auch als Teilturbinen bezeichnet werden, da sie Teile einer gesamten Turbinenanlage darstellen. Die Niederdruckturbinen sind dabei gewöhnlich entsprechend dem Druckgefälle des Dampfes innerhalb einer Turbinenanlage nach den Hoch- bzw. Mitteldruckturbinen angeordnet. Die Temperatur des Dampfes verringert sich dabei ebenfalls, wobei die Temperatur des Dampfes zwischen den Teilturbinen über sogenannte Zwischenüberhitzer wieder erhöht werden kann.

Die Temperatur ist innerhalb einer Teilturbine zwischen Einströmbereich und dem Abdampfbereich des Innengehäuses nicht homogen, da die Temperatur des einströmenden Dampfes verglichen mit dem Abdampf sehr hoch ist. Weiterhin gibt es ein Temperaturgefälle zwischen Innenseite und Außenseite der Wand des Innengehäuses. Daraus resultieren Spannungen innerhalb des Materials, die zu Gehäuseverformungen führen können.

Um Temperaturgradienten und dadurch verursachten Spannungen bzw. Verformungen entgegenzuwirken, werden die Innengehäuse von Dampfturbinen herkömmlicherweise mit einer Blechkonstruktion versehen. Diese Blechkonstruktion dient zur thermischen Isolation des Innengehäuses nach außen und zur Temperaturhomogenisierung über das gesamte Innengehäuse der Turbine. Wärmeisolierende Blechkonstruktionen für Turbinen werden derzeit aus einzelnen Blechteilen gefertigt. Die Bleche müssen gemäß der Konstruktion konfektioniert und an das Gehäuse angepasst werden. Die Bleche werden auf angegossene oder geschweißte Abstandhalter aufgesetzt und dort mit Schrauben befestigt, so dass ein Hohlraum zwischen Innengehäuse und Blechkonstruktion entsteht. Der Hohlraum füllt sich mit stehendem Dampf, wodurch die Isolationswirkung erzielt wird.

Der Nachteil von Blechkonstruktionen ist, dass sie für jede Baureihe von Turbinen neu konstruiert werden müssen. Auch müssen Blechkonstruktionen innerhalb einer Baureihe für jede konstruktive Änderung neu angepasst werden. In diesem Zusammenhang ist es ein weiterer Nachteil, dass die Montage der Blechkonstruktionen aufwändig und zeitintensiv ist. Zudem kann es infolge von Vibration und Verschleiß zum Abreißen einzelner Bleche aus der Konstruktion und zum Lösen von Blechverschraubungen kommen, was sich negativ auf Stabilität, Wärmeisolierung und damit auf den Wirkungsgrad der Turbine auswirkt.

Somit besteht die Aufgabe, eine Wärmeisolierung für eine Strömungsmaschine bereitzustellen, wobei die Wärmeisolierung einfach herstellbar ist, und ein Verfahren zur Herstellung der Wärmeisolierung zu schaffen.

Die Aufgabe wird gemäß der Merkmale der unabhängigen Patentansprüche 1, 14 und 16 gelöst. Bevorzugte Ausgestaltungen dazu sind in den abhängigen Ansprüchen und der Figur angegeben.

Es hat sich herausgestellt, dass die Aufgabe durch eine Strömungsmaschine gelöst wird, die ein den Strömungskanal der Strömungsmaschine radial begrenzendes Innengehäuse umfasst, wobei um das Innengehäuse eine Wärmedämmschicht angeordnet ist, die eine Beschichtung ist, welche ein Grundmaterial aufweist, das einen mikroporösem Kunststoff aufweist. Die Strömungsmaschine ist bevorzugt eine Turbine, noch bevorzugter eine Dampfturbine, und besonders bevorzugt eine Niederdruckturbine.

Die Wärmedämmschicht kann auch als Wärmeschutzmantel oder Ummantelung bezeichnet werden; wegen des Charakters der Beschichtung wird der Begriff Wärmedämmschicht bevorzugt.

Die erfindungsgemäße Wärmedämmschicht des Innengehäuses ist vorteilhaft, weil die Beschichtung durch Auftragen auf die Außenseite der Wand des Innengehäuses einfach hergestellt werden kann. Das Anbringen von Abstandhaltern an das Innengehäuse, wie für herkömmliche Ummantelungen, ist damit nicht notwendig. Die erfindungsgemäße Wärmedämmschicht ist weiterhin vorteilhaft, weil sie auf jede beliebige Form aufgetragen werden kann; dadurch werden Zeit, Aufwand, Material und damit auch Kosten reduziert, die für langwierige Anpassungen und Montage herkömmlicher Ummantelungen nötig sind. Durch das günstige Preis-Leistungs-Verhältnis hat die Erfindung auch einen hohen Wirkungsgrad.

In einer bevorzugten Ausführungsform der Erfindung wird das Innengehäuse von der Wärmedämmschicht ringförmig ummantelt. Mit anderen Worten umschließt die Wärmedämmschicht das Innengehäuse bevorzugt vollständig. Die Beschichtung des gesamten Gehäuses ist vorteilhaft, weil das Innengehäuse dadurch thermisch isoliert wird; die dadurch bewirkte Temperaturhomogenisierung reduziert Temperaturgradienten innerhalb des Innengehäuses und verringert die Gefahr von Verformungen des Innengehäuses.

Um das Innengehäuse und die Wärmedämmschicht ist bevorzugt ein Außengehäuse angeordnet. Das Außengehäuse bietet mechanischen Schutz der innenliegenden Bauteile und ist typischerweise ein Bauteil von Strömungsmaschinen. Dabei besteht ein weiterer Vorteil der erfindungsgemäßen Wärmedämmschicht des Innengehäuses darin, dass die thermische Belastung des Materials des Außengehäuses gering gehalten wird.

Gemäß der Erfindung weist das Grundmaterial der Beschichtung der Strömungsmaschine einen mikroporösen Kunststoff oder mikroporöses anorganisches Material, z.B. Glas oder Keramik, auf. Das Grundmaterial wird hier synonym auch als Matrix bezeichnet. Als mikroporös werden poröse Materialien bezeichnet, deren Porengröße unter 2mm, insbesondere im Bereich von einigen Mikrometern, liegt. Die Verwendung mikroporösen Materials ist vorteilhaft, weil dieses Material sich durch eine geringe Wärmeleitfähigkeit und damit gute Wärmeisolationseigenschaften auszeichnet, ein geringes Gewicht und gute mechanische Eigenschaften hat. Weiterhin sind mikroporöse Kunststoffe gut mit diversen Füllstoffen mischbar. Der Grad der Porosität des Materials, also des Verhältnisses zwischen Porengesamtvolumen und äußerem Volumen der Beschichtung, beträgt zwischen 10% und 90%, bevorzugt 20% bis 70%, noch bevorzugter 25% bis 50% und ganz besonders bevorzugt 20% bis 40%.

Bevorzugt wird der mikroporöse Kunststoff der Matrix der Beschichtung aus der Gruppe umfassend organische Polymere, insbesondere Polyurethan, Polyethylen, Polyolefin, Polyether, Polypropylen, Polytetrafluorethylen, Epoxidharz, Elastomere, Zeolithe, oder einer Mischung davon oder anorganische Stoffen, insbesondere Keramik, ausgewählt. Dabei sind Polyurethan, Polyethylen, Polypropylen, Epoxidharz, Phenolharze, wie z.B. Novolak, und Elastomere bevorzugter. Besonders bevorzugt ist die Verwendung von Polyurethan. Bevorzugt ist auch, dass der Kunststoff duroplastische Eigenschaften hat, um die Thermostabilität der Beschichtung zu erhöhen. Die Matrix kann dabei als Harz, Schaum, Vergussmasse, Gießharz, Dispersion, Lösung, 2-Komponenten-System, feuchtigkeitshärtendes Präpolymer, aber auch als Granulat oder Pulver zur Beschichtung bereitgestellt werden.

Die Matrix der Beschichtung kann Füllstoffe aufweisen, die das Eigenschaftsprofil der Beschichtung aus mikroporösem Kunststoff beeinflussen. Es ist bevorzugt, wenn die Matrix der Beschichtung Hohlkugeln als Füllstoff aufweist. Der Zusatz von Hohlkugeln zur Matrix ist vorteilhaft, weil dadurch vor allem die Wärmedämmeigenschaften verbessert werden können und, durch die Verringerung der Dichte der Beschichtung, das Gewicht der Beschichtung reduziert werden kann. Weiterhin wirkt der Gehalt an Hohlkugeln einer eventuellen Schrumpftendenz der Matrix entgegen, verringert dementsprechend die Verzugsneigung des Materials der Beschichtung und trägt zur Stabilität der Beschichtung bei. Beschichtungen mit Hohlkugeln sind also leichter, isolierender, stabiler und durch weniger Einsatz an Kunststoff auch kostengünstiger.

Im Folgenden wird die Erfindung anhand der beigefügten schematischen Zeichnung näher beschrieben. Es zeigt:

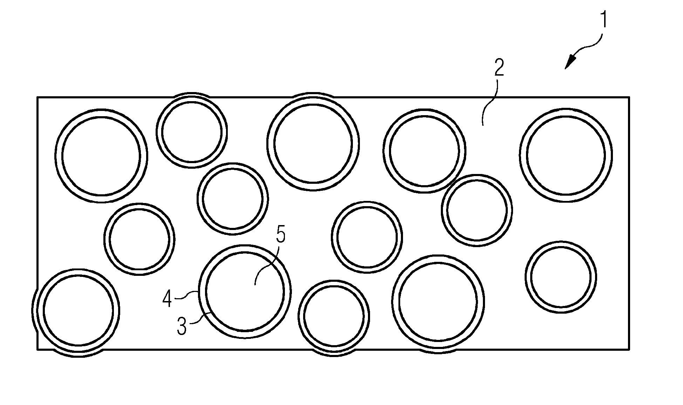

- Fig. 1: eine Darstellung des Aufbaus einer einen mikroporösen Kunststoff aufweisenden Beschichtung, in die Hohlkugeln eingebettet sind.

Das Material der in die Matrix 2 eingebetteten Hohlkugeln 3 kann dabei aus organischem Material, insbesondere den oben aufgelisteten Polymeren oder auch aus Polyacrylat bestehen, jedoch auch aus anorganischen Materialien, besonders Glas oder Keramik.

Ein wesentlicher Faktor mit Einfluss auf die Wärmedämmung und Gewicht der Beschichtung 1 ist dabei die Größe der Hohlkugeln 3. Je größer die Hohlkugeln 3, desto höher der Füllgrad und dementsprechend desto niedriger das Gewicht der Beschichtung 1 und desto geringer auch die wärmeleitenden Eigenschaften. Jedoch sollte die Größe der Hohlkugeln 3 so gewählt werden, dass die mechanische Festigkeit der Beschichtung nicht gefährdet wird. Die Größe der Hohlkugeln 3 wird über ihren Durchmesser definiert. Es ist bevorzugt, wenn der Durchmesser der Hohlkugeln zwischen 5µm und 1000µm, bevorzugter zwischen 10µm und 500µm, noch bevorzugter zwischen 20µm und 300µm und noch bevorzugter zwischen 25µm und 200µm beträgt.
In einer Ausführungsform der Erfindung können alle als Füllstoff verwendeten Hohlkugeln 3 den gleichen Durchmesser aufweisen. Es ist jedoch auch möglich, dass verschiedene Hohlkugeln 3 unterschiedliche Durchmesser aufweisen, also Hohlkugeln 3 verschiedener Größe als Füllstoff verwendet werden. Die Verwendung verschiedener Größen ist vorteilhafter und darum bevorzugt, weil kleinere Kugeln in Räume zwischen größeren Kugeln passen und damit mehr Raum in der Beschichtung 1 durch Hohlkugeln 3 gefüllt werden kann. Mit anderen Worten kann mit der Verwendung von Hohlkugeln 3 unterschiedlicher Größe eine größere Packungsdichte erreicht werden.

In einer Ausführungsform der Erfindung können auf den Außenwänden der Hohlkugeln 3 selbst Beschichtungen 4 aufgebracht werden. Dabei können die Hohlkugeln 3 organische und/oder anorganische Beschichtungen 4 aufweisen. Organische Beschichtungen 4 können aus allen geeigneten Polymerverbindungen bestehen, bevorzugt jedoch aus Polyurethanen, Polyvinylfluorid oder Polyester. Anorganische Beschichtungen 4 können ebenfalls alle dafür geeigneten Stoffe bzw. Verbindungen aufweisen, beispielsweise Glas, Keramik, Silikat, Metalle, Legierungen von Metallen, sowie Salze und Oxide von Metallen oder andere Elemente. Die Beschichtung 4 der Hohlkugeln 3 erfolgt in Abhängigkeit von der Art der Beschichtung nach herkömmlichen, geeigneten Methoden. Die Beschichtung 4 der Hohlkugeln 3 ist vorteilhaft, weil sie die Materialeigenschaften der Kugeln verändert, beispielsweise in Bezug auf die Verteilung der Hohlkugeln 3 in der Matrix 2 sowie die mechanische Festigkeit und die Erhöhung der Wärmedämmungswirkung der Beschichtung 1.

Bezogen auf das Gesamtvolumen der Beschichtung 1 beträgt der Anteil der Hohlkugeln 3 bevorzugt 10% bis 90%, bevorzugter 20% bis 70%, noch bevorzugter 30% bis 60% und noch bevorzugter 35% bis 50%.

In einer Ausführungsform der Erfindung sind die Innenräume 5 der Hohlkugeln 3 mit Gas oder Flüssigkeit gefüllt. Die Füllungen haben Einfluss auf das Gewicht der Hohlkugeln 3 und damit auf das Gesamtgewicht der Beschichtung 1, in Abhängigkeit von der Art der Füllung aber auch besonders auf die Wärmedämmungseigenschaften. Die Füllung mit einem Gas ist dabei bevorzugt, da Gase leicht sind und weniger wärmeleitend als Flüssigkeiten. Die Hohlkugeln 3 können dabei im einfachsten Fall eine einfache Luftfüllung unter annäherndem Normaldruck haben. Es ist jedoch auch möglich, dass die Gasfüllung unter Überdruck vorliegt. Überdruck ist vorteilhaft, weil die Beschichtung dadurch zusätzlich schwingungsdämpfend wirken kann. Überdruck ist weiterhin vorteilhaft, weil dadurch die Hohlkugeln 3 mechanischem Druck durch das Material der Matrix 2 entgegenwirken können. Es ist jedoch auch möglich, dass die Gasfüllung unter leichtem Unterdruck vorliegt. Es ist weiterhin möglich, dass in verschiedenen Hohlkugeln 3 unterschiedliche Drücke herrschen, also normaler, Überdruck und/oder Unterdruck.

Für die Füllung der Innenräume 5 der Hohlkugeln 3 kann außer Luft auch jedes andere geeignete Gas verwendet werden, beispielsweise Stickstoff oder Kohlendioxid. Werden Flüssigkeiten verwendet, ist dabei jede geeignete Flüssigkeit vorstellbar.

In einer weiteren bevorzugten Ausführungsform sind die Hohlkugeln 3 evakuiert, d.h. in den Hohlkugeln herrscht Vakuum oder mindestens annäherndes Vakuum. Evakuierte Hohlkugeln sind vorteilhaft, weil Wärme im Vakuum nicht geleitet wird und damit die thermische Isolierwirkung der Wärmedämmschicht effektiver wird. Es ist weiterhin bevorzugt, wenn evakuierte Hohlkugeln gemischt mit gas- und/oder flüssigkeitsgefüllten Hohlkugeln vorliegen, wobei in den gasgefüllten Hohlkugeln verschiedene Drücke vorliegen können.

Gegenstand der Erfindung ist weiterhin die Verwendung eines mikroporösen Kunststoffs zum Beschichten des Innengehäuses einer Strömungsmaschine. Die Strömungsmaschine ist dabei bevorzugt eine Dampfturbine, und noch bevorzugter eine Niederdruckturbine. In einer bevorzugten Ausführungsform wird ein mikroporöser Kunststoff zum Beschichten verwendet, der mit Hohlkugeln als Füllstoff gemischt ist. Die Art des mikroporösen Kunststoffs und der Hohlkugeln 3 sind dabei oben beschrieben.

Gegenstand der Erfindung ist weiterhin ein Verfahren zum Auftragen einer Wärmedämmschicht auf das Innengehäuse einer Strömungsmaschine mit den Schritten:
- Bereitstellen eines Materials, das ein Grundmaterial aufweist, welches einen mikroporösen Kunststoff aufweist;
- Beschichten des Innengehäuses durch Auftragen des Grundmaterials auf das Innengehäuse;
- Aushärten des aufgetragenen Materials, wodurch die Wärmedämmschicht gebildet wird.

Das Verfahren dient damit der Herstellung der Beschichtung 1 aus mikroporösem Kunststoff durch Beschichten des Innengehäuses mit dem mikroporösen Kunststoff und anschließendem Aushärten. Der mikroporöse Kunststoff wird dabei aus den oben beschriebenen mikroporösen Kunststoffen ausgewählt. Mikroporöse Kunststoffe können in Form einer Gussmasse für ein Spritzgießverfahren oder auch einer Spachtelmasse bereit gestellt werden. Die Verwendung einer Spachtelmasse ist bevorzugt, weil das Beschichten des Innengehäuses der Strömungsmaschine einfach durch Aufspachteln der Spachtelmasse erfolgen kann. Das Anbinden des mikroporösen Materials an das Material des Innengehäuses und das Aushärten der sich bildenden Beschichtung 1 erfolgt während des anschließenden Trocknens. Das Material der Außenwand des Gehäuses kann dabei nach herkömmlichen Methoden vorbehandelt werden, damit die Beschichtung besser haftet.

In einer bevorzugten Ausführungsform werden vor dem Aushärten des Materials Fugen in die Beschichtung 1 eingefügt. Das Einfügen von Fugen ist vorteilhaft, da dadurch bei Bedarf Ansatzstellen vorhanden sind, um die Beschichtung 1 einfach ohne Beschädigung abnehmen und wieder anfügen zu können.

In einer weiteren bevorzugten Ausführungsform des Beschichtungsverfahrens weist der mikroporöse Kunststoff Hohlkugeln 3 als Füllstoff auf. Die Hohlkugeln 3 sind vorteilhaft für das Verfahren, weil sie miteinander bzw. untereinander ähnlich wie in einem Kugellager rollen und dem mikroporösen Kunststoff eine hohe Viskosität und gute Fließeigenschaften verleihen. Das Material der Hohlkugeln 3 wird dabei wie oben beschrieben ausgewählt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Strömungsmaschine, umfassend ein den Strömungskanal der Strömungsmaschine radial begrenzendes Innengehäuse,
wobei um das Innengehäuse eine Wärmedämmschicht angeordnet ist, die eine Beschichtung (1) ist, die ein Grundmaterial (2) aufweist, das einen mikroporösen Kunststoff aufweist.

2. Strömungsmaschine nach Anspruch 1,
wobei die Wärmedämmschicht das Innengehäuse in Umfangsrichtung ringförmig ummantelt.

3. Strömungsmaschine nach Anspruch 1 oder 2,
wobei um Innengehäuse und Wärmedämmschicht weiterhin ein Außengehäuse angeordnet ist.

4. Strömungsmaschine nach einem der vorherigen Ansprüche,
wobei der mikroporöse Kunststoff aus der Gruppe umfassend Polyurethan, Polyethylen, Polyolefin, Polyether, Polypropylen, Polytetrafluorethylen, Keramik, Epoxidharz, Elastomere, Zeolithe oder einer Mischung davon oder anorganische Stoffen wie Keramik ausgewählt wird.

5. Strömungsmaschine nach einem der vorherigen Ansprüche,
wobei das Grundmaterial (2) der Beschichtung (1) Hohlkugeln (3) als Füllstoff aufweist.

6. Strömungsmaschine nach Anspruch 5,
wobei das Material der Hohlkugeln (3) aus Polymeren, Glas oder Keramik ausgewählt wird.

7. Strömungsmaschine nach Anspruch 5 oder 6,
wobei der Durchmesser der Hohlkugeln (3) zwischen 10µm und 500µm beträgt.

8. Strömungsmaschine nach einem der Ansprüche 5 bis 7,
wobei verschiedene Hohlkugeln (3) unterschiedliche Durchmesser aufweisen.

9. Strömungsmaschine nach einem der Ansprüche 5 bis 8,
wobei die Hohlkugeln (3) organische und/oder anorganische Beschichtungen (4) aufweisen.

10. Strömungsmaschine nach einem der Anspruch 5 bis 9,
wobei der Anteil der Hohlkugeln (3) 35 bis 50 Volumen% bezogen auf das Gesamtvolumen der Beschichtung (1) beträgt.

11. Strömungsmaschine nach einem der Ansprüche 5 bis 10,
wobei der Innenraum (5) der Hohlkugeln (3) mit Gas oder Flüssigkeit gefüllt ist.

12. Strömungsmaschine nach einem der Ansprüche 5 bis 10,
wobei der Innenraum (5) der Hohlkugeln (3) evakuiert ist.

13. Strömungsmaschine nach einem der vorherigen Ansprüche,
wobei die Strömungsmaschine eine Niederdruckturbine ist.

14. Verwendung eines mikroporösen Kunststoffes zum Beschichten des Innengehäuses einer Strömungsmaschine.

15. Verwendung nach Anspruch 14,
wobei der mikroporöse Kunststoff Hohlkugeln (3) als Füllstoff aufweist.

16. Verfahren zum Auftragen einer Wärmedämmschicht auf das Innengehäuse einer Strömungsmaschine mit den Schritten:
- Bereitstellen eines Materials, das ein Grundmaterial aufweist, welches einen mikroporösen Kunststoff aufweist;
- Beschichten des Innengehäuses durch Auftragen des Grundmaterials auf das Innengehäuse;
- Aushärten des aufgetragenen Materials, wodurch die Wärmedämmschicht gebildet wird.

17. Verfahren nach Anspruch 16,
wobei der mikroporöse Kunststoff Hohlkugeln (3) als Füllstoff aufweist.
